# EUROPEAN PATENT APPLICATION

(11) **EP 4 841 267 A1**
(43) Date of publication of application: **18.11.2026**
(21) Application number: 26177448.3
(22) Date of filing: 08.05.2026
(51) Int. Cl.: G01N 35/00

(54) **STORAGE SYSTEM OF BIOLOGICAL SAMPLES**

(30) Priority: 13.05.2025 IT 202500010712
(71) Applicant: Logimatic Components & Consulting S.p.A., 26845 Codogno (LO) (IT)
(72) Inventor: BONINI, Lara, 43036 Fidenza (PR) (IT)
(74) Representative: Mari, Marco Giovanni

(57) **Abstract**

A storage system (100), within a room (500), of biological samples (200, 300) contained in magazines (400) each provided with an identification code (401).

Said storage system (100) comprises:
- a plurality of shaped modular shelves (1), each comprising a plurality of housings (2) for said magazines (400), provided with identification codes (3);
- a robotic unit (4) comprising a shuttle (5) movable within said room (500) and an anthropomorphic arm (6) comprising at least one gripper (7) for said magazines (400);
- a delivery station (9) and a pick up station (10) for magazines (400) to be stored or already stored;
- a control unit suitable for managing a storage program.

Said shaped modular shelves (1) are suitable to be superimposed and placed side by side in a free form for creating at least one honeycomb wall (11) di housings (2), arranged according to a matrix of rows and columns, even with discontinuous housings (2), for accommodating said magazines (400) to be stored.

Said shuttle (5) is movable along a path which follows the arrangement of said at least one honeycomb wall (11).

Said robotic unit (4), controlled by said control unit, cooperates with said delivery station (9) and with said pick up station (10) for moving said magazines (400) towards or away from said at least one honeycomb wall (11).

## Description

### Technical field

The invention relates to the field of hospital equipment for storing biological samples to be used in the field of anatomical pathology.

More in detail, the invention relates to a robotic and modular storage system of biological samples, both arranged in paraffin blocks and/or on histological slides, within a storage room, which is also advantageously adaptable to said room.

### Background art

In anatomical pathology, "material to be stored" comprises all the tissues and cells collected from patients, which must be preserved for future clinical requirements. This material is the property of the patient and must always remain available for possible diagnostic or predictive investigations.

The biological samples (biopsies and surgical specimens) are processed, embedded in paraffin blocks (FFPE) or arranged on slides, and used for the diagnosis. In the description below, when reference is made to biological samples, these are either samples embedded in paraffin blocks or arranged on slides.

The procedures for storing and preserving biological samples in pathological anatomy hospital departments generally requires the use of:
- first-level storage rooms, for short-term storage of newly processed samples, of limited capacity and usually located directly within the analysis laboratory;
- second-level storage rooms, for medium-term storage of recent samples (with an age ranging from a few months to a few years), of variable capacity and usually located within the hospital structure, even if not always in suitable or expressly dedicated spaces;
- third-level storage rooms, for long-term storage of less recent samples (with an age of several years), of high capacity and normally located remotely relative to the hospital structure.

The present invention falls within the field of second-level storage rooms, for medium-term storage of biological samples.

The creation of a suitable storage room requires investments in infrastructures, equipment and personnel, with costs that vary according to the volume of samples and to the storage structure.

A critical aspect to consider concerns the spaces destined for storage, which often have not been specifically designed for this purpose. In many cases, these are repurposed areas, adapted for the preservation of materials, but which have various structural and logistics problems. The main difficulties include limited accessibility, which makes transport and handling of the samples complex, and the bearing weight of the floor, which is not always adequate and limits the amount and weight of the material that may be stored.

Another critical element is represented by the configuration of the available spaces, which can be limited, irregular or non-uniform, preventing efficient organisation of the storage unit. In fact, in many cases there may be windows, columns, air conditioning and aeration ducts, non-removable pre-existing structures, electrical panels, sinks, built-in furniture and other elements that prevent uniform and optimal use of the space.

The use of furniture units and cabinets substantially of the same shape and size, and their positioning in spaces, places and storage rooms that are often poorly lit, makes it difficult for operators to identify the cabinets that must be accessed for orderly and precise storage, or retrieval, of biological samples.

The use of conventional shelving for storing biological samples is somewhat inefficient, as:
- the irregular layout of the room leads to numerous interruptions in the arrangement of the shelving, greatly reducing the storage capacity;
- the operator must manage a fragmented and somewhat inaccessible area, resulting in loss of time and efficiency.

These conditions translate into reduced storage capacity and complex management of the samples, with possible repercussions on the preservation and traceability of the materials.

### Presentation of the invention

The object of the invention is to overcome the aforesaid negative aspects by providing a robotic and modular storage system of biological samples, which is optimised, functional and efficient, easily accessible, adaptable to hospital environments, characterised by variable configurations and spaces that are often discontinuous and limited.

The object of the invention is achieved with a storage system of biological samples within a room, wherein said biological samples are contained in magazines, each magazine being provided with an identification code, characterised in that it comprises:
- a plurality of shaped modular shelves, each comprising a plurality of housings for said magazines, provided with identification codes;
- a robotic unit comprising:
   - a shuttle movable within said room;
   - an anthropomorphic arm associated with said shuttle comprising at least one gripper for said magazines and an identification code reader;
   - a delivery station for magazines to be stored on said modular shelves;
   - a pick up station for magazines stored in said modular shelves;
   - a control unit suitable for managing a storage program for said magazines,
   wherein:
   - said shaped modular shelves are suitable to be superimposed and placed side by side in a free form for creating at least one honeycomb wall of housings, arranged according to a matrix of rows and columns, even with discontinuous housings, for accommodating said magazines to be stored;
   - said shuttle is movable along a path which follows the arrangement of said at least one honeycomb wall;
   - said robotic unit, controlled by said control unit, cooperates with said delivery station and with said pick up station for moving said magazines towards or away from said at least one honeycomb wall.

Further features of the invention are described in the dependent claims.

The storage system of biological samples according to the invention advantageously allows a conventional space to be transformed into a robotic storage unit similar to a large automatic distributor, obtaining a solution that is functional, modular and easy to install.

A robotic and modular storage system of biological samples, easily adaptable to the room which contains it, allows a significant reduction in the design, installation and testing times of the actual physical storage unit.

Even more advantageously, this storage system using modular shelves freely movable towards one another, stackable and which can be cut to size on site, allows an optimal use of all the space available within the room chosen for medium-term storage of the biological samples, thereby improving the usability of said space.

More generically:
- the on-site adaptation of the storage system is a simple operation, which requires minimum effort by installation technicians;
- personnel do not have direct access to the storage unit;
- there is a single shared point in which to deposit the biological samples to be stored;
- pick up of the samples takes place through the controlled access point, which only allows retrieval of the samples specifically requested;
   - this solution guarantees greater security.

### Brief description of the drawings

Further features and advantages of the invention will be more apparent from the detailed description provided below, with the aid of the drawings which show a preferred embodiment thereof, illustrated by way of non-limiting example, wherein:
- Fig. 1 shows, in a schematic top view, a storage system of biological samples according to the invention;
- Figs. 2-3 show, in an axonometric view, a magazine of biological samples, paraffin blocks and histological slides, respectively, to be stored with the storage system according to the invention;
- Figs. 4-8 show, in axonometric views, modular shelves which belong to the storage system, in various steps of preparation;
- Figs. 9 and 10 show, in an axonometric view, two different components of the storage system according to the invention;
- Figs. 11-14 show, in an axonometric view, operating steps of the storage system according to the invention.

### Detailed description of the invention

In anatomical pathology, "material to be stored" comprises all tissues and cells collected from the patients, which must be preserved for future clinical requirements.

This material is processed and embedded first in paraffin blocks and then sent to the cutting step to produce histological slides. After this step has terminated, the block must be traced and stored, so that it can be rapidly and safety retrieved to product other slides if required.

Based on the present storage system, the operator in charge of cutting the blocks, after completing the cutting step, manually places the blocks inside a specific magazine, making sure to arrange them in an orderly fashion.

Likewise, the histological slides, after being examined by the pathologist, must also be traced and stored in suitable magazines.

In the description below reference will be made to biological samples, which may be either paraffin blocks 200 or histological slides 300.

Both the paraffin blocks 200 and the histological slides 300 are individually marked by an identification code (not illustrated), for example composed of an alphanumerical code and of a data matrix code.

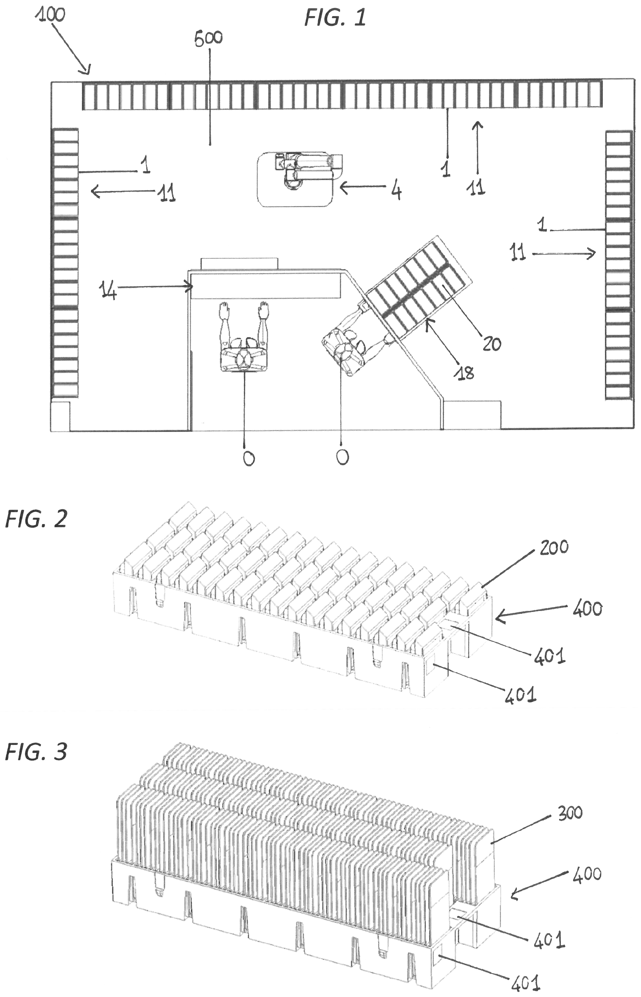

Figs. 2 and 3 show two complete magazines 400, one of paraffin blocks 200 and one of histological slides 300, ready to be stored, within a dedicated storage room 500, with a storage system 100 according to the invention.

As is apparent from the figures, an identification code 401, for example of laser engraved QR Code type, is affixed to each magazine 400.

With particular reference to the schematic overall view of Fig. 1, this illustrates a modular and robotic storage system 100 of biological samples 200, 300 contained in magazines 400, comprising:
- a plurality of shaped modular shelves 1, each comprising a plurality of housings 2 for said magazines 400 provided with identification codes 3, wherein said shaped modular shelves 1 are suitable to be superimposed and placed side by side in a free form for creating at least one honeycomb wall 11 of housings, arranged according to a matrix of rows and columns, for accommodating said magazines 400 to be stored;
- a robotic unit 4 comprising:
   - a shuttle 5 movable within said room 500;
   - an anthropomorphic arm 6 associated with said shuttle 5, comprising a gripper 7 for said magazines 400 and an identification code reader 8;
   - a delivery station 9 for magazines 400 to be stored on said modular shelves 1;
   - a pick up station 10 for magazines 400 stored in said modular shelves 1;
   - a trolley 18 for transporting magazines 400 containing paraffin blocks 200 and/or histological slides 300 classified as "closed cases" to a long-term storage unit;
   - a control unit (not illustrated) suitable for managing a storage program for said magazines 400.

Fig. 1 illustrates a plan of an example of complete installation of the storage system 100 according to the invention in a dedicated, specifically equipped room 500.

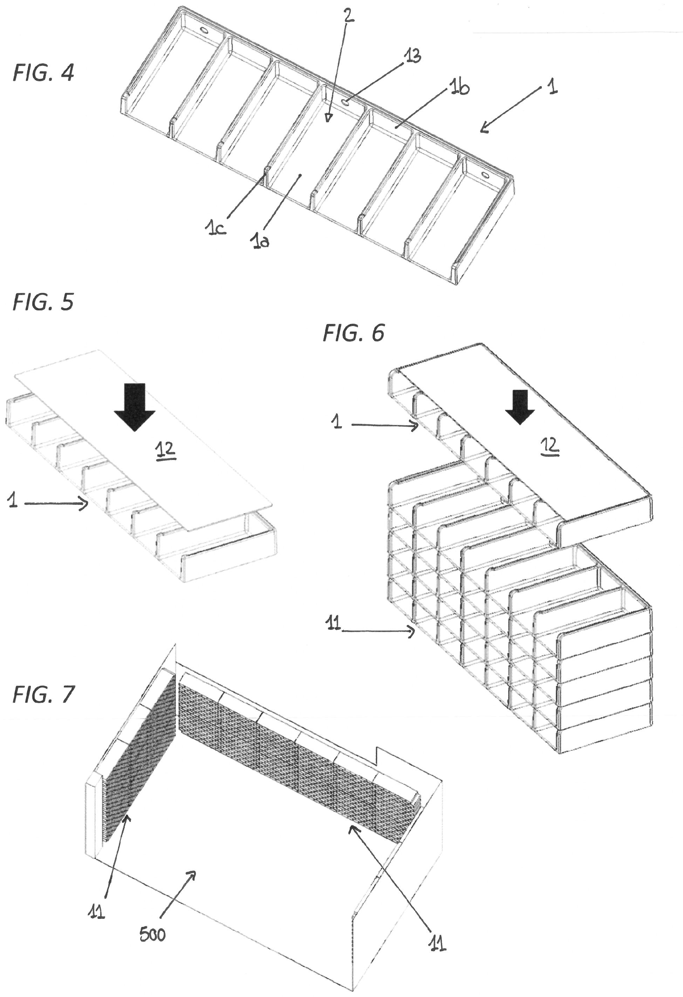

Figs. 4-8 illustrate in detail both said shaped modular shelves 1 and said honeycomb wall 11.

The shaped modular shelf 1 is an element advantageously, but not exclusively, obtained from a plate of thermoformed plastic material and comprises a base 1a, a back wall 1b, and vertical dividing walls 1c suitable for delimiting said housings 2.

In the variant illustrated, the base 1a of a modular shelf 1 acts as cover for the modular shelf below, while for the top modular shelf 1 a cover plate 12 is provided.

In a further possible variant, each modular shelf 1 comprises its own cover plate 12, also useful for load distribution.

Advantageously, said shaped modular shelves 1 are characterised by being inexpensive to construct, easy to install in the rooms destined for storage, minimising assembly times. Their design allows them to be superimposed without the use of screws or other fixing elements, as they can be cut to take account of any obstacles, thereby allowing the creation of honeycomb walls with customisable heights and widths.

To guarantee greater safety and stability, the modular shelves can be fixed to the walls of the storage room by screw fixing means, such as wall plugs, preventing the risk of overturning and reducing the load on the floor. To this end, the back wall 1b of each modular shelf 1 comprises holes 13 for screws to pass through.

Fig. 7 shows an example of deployment of modular shelves 1 to form three honeycomb walls 11 for equipping a storage room 500, maximising the different available heights of the walls of said room.

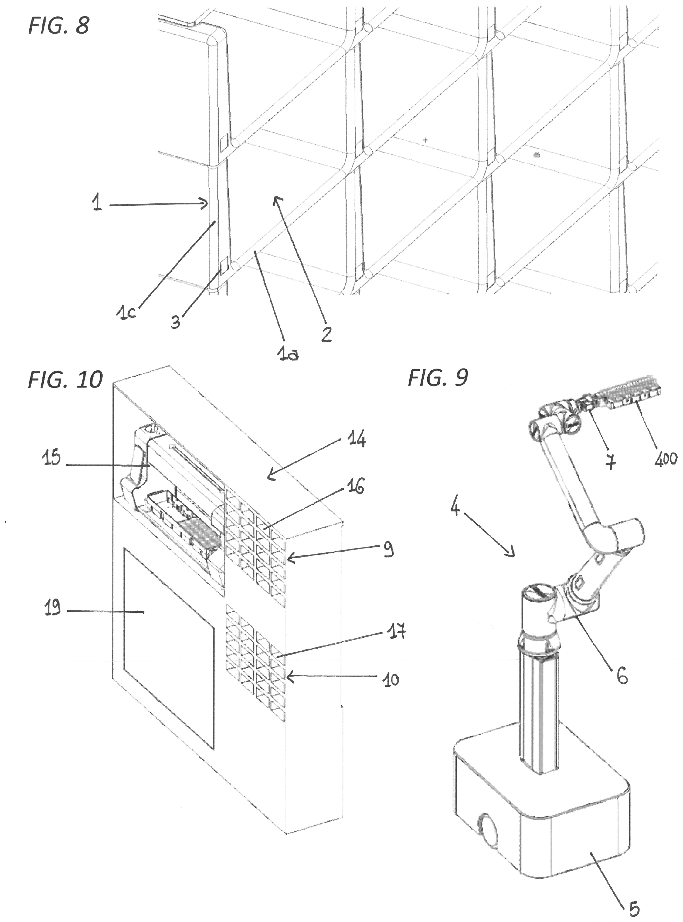

Fig. 8 shows the identification codes 3 provided on the modular shelves 1; in particular, the identification codes 3 of each housing 2 are arranged on plates applied to the front of the modular shelf 1, at the intersection point between the base 1a and a corresponding vertical dividing wall 1c, so that they can be easily read by the identification code reader 8 present on the gripper 7 of the anthropomorphic arm 6 which will have the task of picking up or arranging the magazines 400 from/in the dedicated housings 2.

With particular reference to Fig. 9, this illustrates a robotic unit 4 according to the invention, comprising, as mentioned above, a self-driving robotic shuttle 5, movable within said storage room 500, and a six-axis collaborative anthropomorphic arm 6, mounted on said shuttle 5, comprising a gripper 7 for said magazines 400 and an identification code reader 8.

Said robotic unit 4, controlled by said control unit, cooperates with said delivery station 9 and with said pick up station 10 for moving said magazines 400 towards or away from said at least one honeycomb wall 11.

Said shuttle 5 is movable along a path which follows the arrangement of said at least one honeycomb wall 11.

To this end, said robotic storage system 100 comprises floor position indication means, either proximity or wireless, which define the path of said shuttle 5 based on the shape of said storage room 500 obtained after having positioned the modular shelves 1 as required.

Said anthropomorphic arm 6 comprises articulation points suitable for allowing the movements along directions belonging to three orthogonal planes and the rotation about three axes of the anthropomorphic arm itself and of the gripper 7 associated thereto, so as to be able to access any housing 2 of said honeycomb walls 11 to position or pick up said magazines 400.

In the plan diagram of Fig. 1, the storage system 100 comprises a single reception structure 14 which acts both as delivery station 9 for magazines 400 to be stored on said modular shelves 1, and as pick up station 10 for magazines 400 that were stored in said modular shelves 1 and which are now required for further investigations.

Said reception structure 14 defines a protection perimeter and separates the external operator O from the robotic unit 4 located inside the storage room 500.

Said reception structure 14 is configured as a bench, comprising:
- a device 15 for the identification of biological samples, whether paraffin blocks 200 or histological slides 300, inside a magazine 400;
- a first plurality of through-housings 16 in which magazines 400 to be stored may be inserted by the operator O to then be picked up and managed inside the storage room 500 by the robotic unit 4; said first plurality of housings 16 forms the delivery station 9 for magazines 400 to be stored;
- a second plurality of through-housings 17 into which the robotic unit 4 may insert stored magazines 400 which are once again required for diagnostic investigations and which may therefore be picked up by the operator O; said second plurality of housings 17 forms the pick up station 10 for stored magazines 400;
- an electrical control and interface panel 19, for use by the operator O, in communication with said control unit.

Said device 15 for the identification of paraffin blocks 200 and of histological slides 300 has different functions. For example, through a laser pointer, selectively orientable and activatable, it is possible to provide the operator with a visual indication of the exact slides and the exact paraffin blocks to be retrieved, by means of a light beam emitted by said laser pointer, allowing the operations to retrieve said slides and said blocks to be carried out more quickly.

Operation of the invention is described below.

### Sample storage step

The operator O transports, from the hospital department to the storage room 500, a certain number of magazines 400, containing the inclusions processed over the course of the day, whether these are paraffin blocks 200 or histological slides 300.

The operator O inserts the magazines 400 one at a time into the device 15 for the identification of the biological samples, which has the task of associating the identification code present on each paraffin block 200 or on each histological slide 300 with the identification code 3 of the magazine 400 and with its physical position therein. If a biological sample 200, 300 is not read correctly, the device 15 for the identification notifies the operator O of this anomaly.

After the scanning and validation step has been completed, the operator O is authorised to place the magazine 400 in one of the through-housings 16 of the delivery station 9 for magazines 400 to be stored.

These operations are repeated for all the magazines 400 destined for storage.

After the scanning and validation step has terminated, the robotic unit 4 is activated.

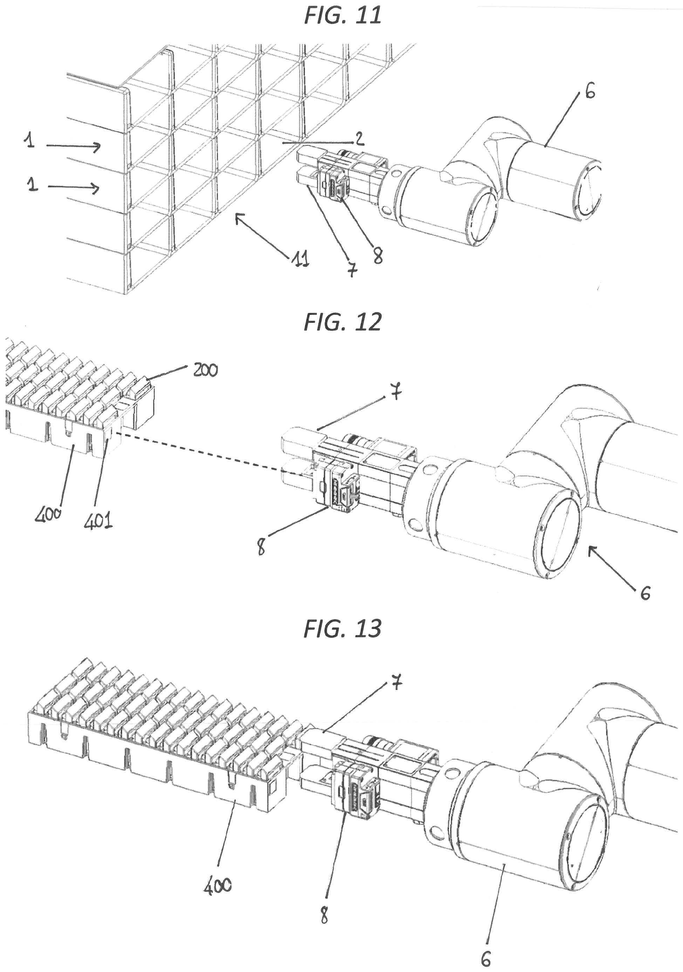

With reference to Fig. 11, the shuttle 5 is positioned in front of the honeycomb wall 11 with the gripper 7 of the anthropomorphic arm 6 at a free housing 2. Fig. 11 shows the detail of identification of the free housing 2, through reading of the identification code 3 present on the modular shelf 1, as well as the corresponding adjustment of the spatial coordinates for alignment of the anthropomorphic arm 6.

After the presence of magazines 400 in the housings 16 of the delivery station 9 has been detected, the shuttle 5 positions itself in the correct area in front of the delivery station 9, and the anthropomorphic arm 6 autonomously picks up the magazine 400 (after reading the identification code - Figs. 12 and 13), moves in the room 500 along the predefined path along the honeycomb walls 11 created in the storage room and selects, controlled by said control unit, a free housing 2 on a modular shelf 1 of a honeycomb wall 11, into which it automatically and accurately deposits the magazine 400.

During the step of positioning the magazine 400, the identification code reader 8 of the storage system provided on the gripper 7 of the anthropomorphic arm 6 reads the identification code 3 present on the housing 2 previously occupied, thereby verifying that the free position corresponds to the position proposed by the storage system 100.

Moreover, the identification code reader 8 provides precise information on the coordinates of the housing 2 in the space, allowing any positioning errors of the anthropomorphic arm 6 to be readjusted, for example by correcting the rotation of the gripper 7.

After the step of positioning and storing the single magazine 400 has been correctly carried out, the storage system 100 transmits, through the control unit, the physical position of the magazine 400 previously stored to the management software of the hospital structure (for example of LIS type) to maintain the traceability of each biological sample 200, 300 contained in that magazine 400.

### Sample pick up step

The pathologist requests, via the management software of the hospital structure, the biological samples 200, 300 of one or more patients.

The management software of the hospital structure communicates the request to the storage system 100, which, knowing the exact position of the magazines 400 that contain these biological samples 200, 300, controls the robotic unit 4 to position itself in the point of the honeycomb wall 11 indicated, and in particular with the gripper 7 of the anthropomorphic arm 6 in front of the specific housing 2.

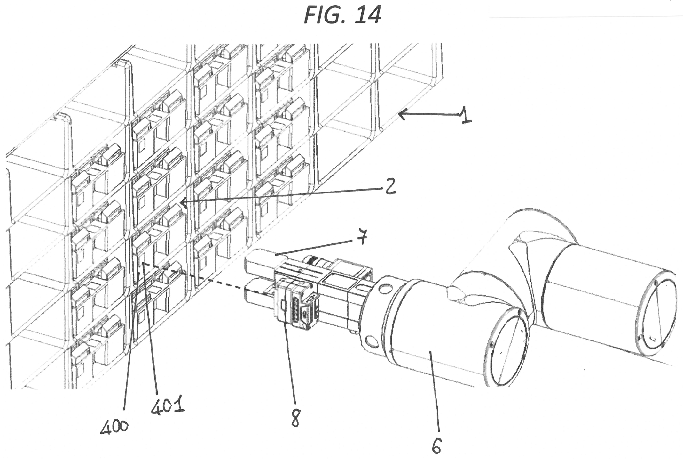

Through the identification code reader 8 present on the gripper 7, the identification code 401 present on the magazine 400 identified is read (Fig. 14). In addition to the identification code 401, the reader 8 also transmits the spatial physical coordinates of the position of the magazine 400 to the control unit, allowing the anthropomorphic arm 6 to pick it up with precision.

The robotic unit 4 then moves from the honeycomb wall 11 to the reception structure 14 and deposits the magazine 400 in one of the free housings 17 of the pick up station 10, from which the operator O picks it up.

The operator O then positions the magazine 400 previously delivered by the robotic unit 4 inside the device 15 for the identification of the biological samples which, through a laser pointer, indicates the biological sample 200, 300 requested.

After having picked up the biological samples required 200, 300, the operator O replaces the magazine 400 in the delivery station 9, to be stored once again by means of the method described previously.

### Storage unit emptying step

Once the biological samples 200, 300 present in the magazines 400 have been defined as "closed cases", it is possible to move the related magazines 400 from the medium-term storage unit to a long-term storage unit.

To this end, it is necessary to transfer the magazines 400 from the housings 2 of the honeycomb wall 11 to housings 20 provided on the trolley 18 for transportation to the long-term storage unit.

The operation is carried out when the robotic unit 4 is not engaged in the normal storage and retrieval activities of the magazines 400, usually during the night.

The management software of the hospital structure communicates the list of magazines 400 to be transferred to the control unit of the storage system 100. The robotic unit 4 picks up each magazine 400 and deposits it in the available housings 20 of the trolley 18.

After the transfer procedure has been completed, the operator O receives a notification from the control unit to pick up the entire trolley 18, which, being equipped with wheels, can be easily transported to the long-term storage area. A completely empty new trolley is then positioned in the storage room 500, ready for a new transfer cycle.

## Claims

1. Storage system (100) of biological samples (200, 300) within a room (500), wherein said biological samples (200, 300) are contained in magazines (400), each magazine (400) being provided with an identification code (401), **characterised in that** it comprises:
- a plurality of shaped modular shelves (1), each comprising a plurality of housings (2) for said magazines (400), provided with identification codes (3);
- a robotic unit (4) comprising:
- a shuttle (5) movable within said room (500);
- an anthropomorphic arm (6) associated with said shuttle (5) comprising at least one gripper (7) for said magazines (400) and an identification code reader (8);
- a delivery station (9) for magazines (400) to be stored on said modular shelves (1);
- a pick up station (10) for magazines (400) stored in said modular shelves (1);
- a control unit suitable for managing a storage program for said magazines (400),
wherein:
- said shaped modular shelves (1) are suitable to be superimposed and placed side by side in a free form for creating at least one honeycomb wall (11) of housings (2), arranged according to a matrix of rows and columns, even with discontinuous housings (2), for accommodating said magazines (400) to be stored;
- said shuttle (5) is movable along a path which follows the arrangement of said at least one honeycomb wall (11);
- said robotic unit (4), controlled by said control unit, cooperates with said delivery station (9) and with said pick up station (10) for moving said magazines (400) towards or away from said at least one honeycomb wall (11).

2. Storage system (100) according to claim 1, **characterised in that** each modular shelf (1) comprises a base (1a), a back wall (1b), and vertical dividing walls (1c) suitable for delimiting said housings (2).

3. Storage system (100) according to claim 1, **characterised in that** each modular shelf (1) comprises a cover plate (12).

4. Storage system (100) according to claim 1, **characterised in that** said back wall (1b) comprises holes (13) suitable for being engaged by screw fixing means of said modular shelves (1) to a wall of said room (500) used for the storage of biological samples (200, 300).

5. Storage system (100) according to claim 2, **characterised in that** the identification codes (3) of each housing (2) are arranged on plates applied to the front of the modular shelf (1), at the intersection point between the base (1a) and a corresponding vertical dividing wall (1c).

6. Storage system (100) according to claim 1, **characterised in that** it comprises position indication means suitable for defining the path of said shuttle (5).

7. Storage system (100) according to claim 1, **characterised in that** said anthropomorphic arm (6) comprises articulation points suitable for allowing the translation and rotation in space of the anthropomorphic arm itself and of the gripper (7) associated with it, so as to be able to access any housing (2) of said at least one honeycomb wall (11).

8. Storage system (100) according to claim 1, **characterised in that** it comprises a reception structure (14), defining a protection perimeter between the storage room (500) and the outside, comprising said delivery station (9) for magazines (400) to be stored and said pick up station (10) for stored magazines (400).

9. Storage system (100) according to claim 8, **characterised in that** said reception structure (14) comprises a device (15) for the identification of biological samples (200, 300) inside a magazine (400).

10. Storage system (100) according to claim 1, **characterised in that** said delivery station (9) for magazines (400) to be stored comprises a first plurality of through-housings (16) in which magazines (400) to be stored may be inserted by an operator (O), suitable for subsequently being picked up and managed within the storage room (500) by the robotic unit (4).

11. Storage system (100) according to claim 1, **characterised in that** said pick up station (10) of stored magazines (400) comprises a second plurality of through-housings (17) into which the robotic unit (4) may insert stored magazines (400) which are once again required for diagnostic investigations and which may therefore be picked up by an operator (O).

12. Storage system (100) according to claim 1, **characterised in that** it comprises a trolley (18) for transporting magazines (400) containing biological samples (200, 300) classified as "closed cases" to a long-term storage unit.
